# EUROPEAN PATENT APPLICATION

(11) **EP 4 593 138 A1**
(43) Date of publication of application: **30.07.2025**
(21) Application number: 25150815.6
(22) Date of filing: 09.01.2025
(51) Int. Cl.: H01M 10/04, H01M 10/0562

(54) **PRESSURIZING AND SEALING DEVICE FOR ALL-SOLID-STATE SECONDARY BATTERY**

(30) Priority: 15.01.2024 KR 20240005887
(71) Applicant: Hana Technology Co., Ltd., Gyeonggi-do 17118 (KR)
(72) Inventor: OH, Tae Bong, 16223 Suwon-si (KR); LEE, Souk Woo, 18297 Hwaseong-si (KR); HAN, Seung A, 16682 Suwon-si (KR); HAN, Seung Kyu, 15500 Ansan-si (KR)
(74) Representative: Stöckeler, Ferdinand

(57) **Abstract**

Proposed is a pressurizing and sealing device for an all-solid-state secondary battery. More particularly, proposed is a pressurizing and sealing device for an all-solid-state secondary battery, in which a side of the pressurizing and sealing device is vacuum-adsorbed to seal an all-solid-state secondary battery while forming an internal space that transmits a pressurizing force to the all-solid-state battery, thereby enabling the all-solid-state battery to be pressurized under isotropic pressure conditions during a high-temperature pressurization process for the second battery.

## Description

### CROSS REFERENCE TO RELATED APPLICATION

The present application claims priority to Korean Patent Application No. 10-2024-0005887, filed January 15, 2024, the entire contents of which is incorporated herein for all purposes by this reference.

### BACKGROUND OF THE INVENTION

### Field of the Invention

The present disclosure relates generally to a pressurizing and sealing device for an all-solid-state secondary battery. More particularly, the present disclosure relates to a pressurizing and sealing device for an all-solid-state secondary battery, in which a side of the pressurizing and sealing device is vacuum-adsorbed to seal an all-solid-state secondary battery while forming an internal space that transmits a pressurizing force to the all-solid-state battery, thereby enabling the all-solid-state battery to be pressurized under isotropic pressure conditions during a high-temperature pressurization process.

### Description of the Related Art

Recently, as the development of electric vehicles, energy storage batteries, robots, satellites, and the like has been accelerated, various studies have been conducted on high-performance secondary batteries capable of being repeatedly charged and discharged. Currently commercialized secondary batteries include nickel cadmium batteries, nickel metal hydride batteries, nickel zinc batteries, lithium secondary batteries, and the like. Of these, lithium secondary batteries have attracted much attention because they have almost no memory effect compared to nickel-based batteries and thus can be discharged and charged freely. Advantageously, the lithium secondary batteries also have extremely low self-discharge rate and high energy density.

Such lithium secondary batteries generally include a lithium-based oxide and a carbon material as a positive electrode active material and a negative electrode active material, respectively. Lithium secondary batteries include an electrode assembly in which a positive electrode plate and a negative electrode plate respectively coated with a positive electrode active material and a negative electrode active material are disposed with a separator being interposed therebetween, and a pouch, that is, a battery casing, in which the electrode assembly and an electrolyte are sealed and accommodated.

All-solid-state secondary batteries are secondary batteries in which their main materials are all solid. Since a solid electrolyte is used, the risk of fire and explosion can be significantly reduced, broadening the range of applications. Also, since lithium metal, which was difficult to apply in conventional lithium secondary batteries due to the risk of fire and explosion despite its excellent performance, is used as a negative electrode material, the energy density can be dramatically increased. Due to these advantages, the development of all-solid-state secondary batteries is being under active progress.

In the case of the solid electrolyte of the all-solid-state secondary batteries, since the movement of ions is confined within a solid lattice, the interface resistance has to be minimized while maximizing a contact interface between the active materials and the electrolyte. To this end, after stacking a layer of the solid electrolyte, a high-temperature pressurization process needs to be performed under isotropic pressure conditions through a fluid as a pressure-transmitting medium. At this time, when pressurizing the all-solid-state secondary battery under isotropic pressure conditions, a device such as a jig that secures airtightness is required to protect the all-solid-state secondary battery from the fluid as a pressure-transmitting medium.

To overcome the above problem, the inventors of the present disclosure have proposed a novel pressurizing and sealing device for an all-solid-state secondary battery, which will be described in detail later.

The foregoing is intended merely to aid in the understanding of the background of the present disclosure, and is not intended to mean that the present disclosure falls within the purview of the related art that is already known to those skilled in the art.

### Documents of Related Art

(Patent document 1) Korean Patent Application Publication No. 10-2015-0069523 "ALL SOLID SECONDARY BATTERY AND METHOD OF PREPARING ALL SOLID SECONDARY BATTERY"

### SUMMARY OF THE INVENTION

Accordingly, the present disclosure has been made keeping in mind the above problems occurring in the related art, and one objective of the present disclosure is to provide a pressurizing and sealing device for an all-solid-state secondary battery, in which a side of the pressurizing and sealing device is vacuum-adsorbed to seal the all-solid-state secondary battery while forming an internal space that transmits a pressurizing force to the all-solid-state battery, thereby enabling the all-solid-state battery to be pressurized under isotropic pressure conditions during a high-temperature pressurization process.

Another objective of the present disclosure is to provide a pressurizing and sealing device for an all-solid-state secondary battery, in which an adsorption portion is formed at a side of each of an upper cover and a lower cover, thereby preventing a fluid from flowing into an internal space.

Another objective of the present disclosure is to provide a pressurizing and sealing device for an all-solid-state secondary battery, in which an upper cover and a lower cover are vacuum-adsorbed with each other by means of, for example, silicone, thereby forming a vacuum in an internal space.

Another objective of the present disclosure is to provide a pressurizing and sealing device for an all-solid-state secondary battery, in which a shape fixing portion is formed at a side of each of an upper cover and a lower cover, thereby preventing overall shape deformation as much as possible when a pressurizing force is applied by heat transfer oil.

Another objective of the present disclosure is to provide a pressurizing and sealing device for an all-solid-state secondary battery, in which a pressurizing surface is formed at a side of each of an upper cover and a lower cover so that the pressurizing surfaces face each other, thereby enabling them to make contact with and pressurize both upper and lower surfaces of the all-solid-state battery interposed therebetween.

Another objective of the present disclosure is to provide a pressurizing and sealing device for an all-solid-state secondary battery, in which a pressurizing surface made of a silicone material is formed, thereby providing excellent heat resistance and elongation properties.

In order to accomplish the objectives of the present disclosure as described above and to carry out the characteristic functions of the present disclosure described below, embodiments of the present disclosure are described as follows.

According to one embodiment of the present disclosure, a pressurizing and sealing device for an all-solid-state secondary battery may include: a sealing part including a lower cover, and an upper cover configured to be vacuum-adsorbed with a side of the lower cover to form an internal space in which the all-solid-state secondary battery is placed. The upper cover may include: a first pressurizing portion configured to pressure an upper side of the all-solid-state battery placed in the internal space of the sealing part. The first pressurizing portion may include: a first pressurizing surface configured to pressurize an upper surface of the all-solid-state battery placed in the internal space of the sealing part by being pressurized by a fluid during a pressurization process. The lower cover may include: a second pressurizing portion configured to pressure a lower side of the all-solid-state battery placed in the internal space of the sealing part. The second pressurizing portion may include: a second pressurizing surface configured to pressurize a lower surface of the all-solid-state battery placed in the internal space of the sealing part by being pressurized by the fluid during the pressurization process.

According to another embodiment of the present disclosure, in the pressurizing and sealing device for the all-solid-state secondary battery, the upper cover may further include: a first adsorption portion formed at ends or edges of the upper cover and configured to be adsorbed with a side of the lower cover.

According to another embodiment of the present disclosure, in the pressurizing and sealing device for the all-solid-state secondary battery, the upper cover may further include: a first shape fixing portion configured to maintain a shape of the upper cover during the pressurization process.

According to another embodiment of the present disclosure, in the pressurizing and sealing device for the all-solid-state secondary battery, the first shape fixing portion may have a larger vertical thickness than the first pressurizing surface.

According to another embodiment of the present disclosure, in the pressurizing and sealing device for the all-solid-state secondary battery, the internal space of the sealing part may be vacuumed by adsorption of the first adsorption portion.

According to another embodiment of the present disclosure, in the pressurizing and sealing device for the all-solid-state secondary battery, the upper cover may further include: a first detachment portion formed at a side of the upper cover and configured to allow the upper cover to be detached from the lower cover when the pressurization process is completed.

According to another embodiment of the present disclosure, in the pressurizing and sealing device for the all-solid-state secondary battery, the first detachment portion may include: a first detachment hole extending in one direction.

According to another embodiment of the present disclosure, in the pressurizing and sealing device for the all-solid-state secondary battery, the first pressurizing portion may further include: a first pressurizing depression formed in a groove shape on an upper surface of the upper cover and configured to allow the first pressurizing surface and the upper surface of the all-solid-state battery to be brought into contact with each other and pressurized.

According to another embodiment of the present disclosure, in the pressurizing and sealing device for the all-solid-state secondary battery, the first adsorption portion may be formed in a shape with round corners.

According to another embodiment of the present disclosure, in the pressurizing and sealing device for the all-solid-state secondary battery, the upper cover may further include: a second shape fixing portion configured to maintain a shape of the lower cover during the pressurization process; and a second adsorption portion formed at ends or edges of the lower cover and configured to be adsorbed with the first adsorption portion.

According to another embodiment of the present disclosure, in the pressurizing and sealing device for the all-solid-state secondary battery, the lower cover may further include: a second detachment portion formed at an end of the lower cover and configured to allow the lower cover to be detached from the upper cover when the pressurization process is completed.

According to another embodiment of the present disclosure, in the pressurizing and sealing device for the all-solid-state secondary battery, the second pressurizing portion may further include: a second pressurizing depression formed in a groove shape on a lower surface of the lower cover and configured to allow a side of the second pressurizing portion and the lower surface of the all-solid-state battery to be brought into contact with each other and pressurized.

According to another embodiment of the present disclosure, in the pressurizing and sealing device for the all-solid-state secondary battery, the first pressurizing surface and/or the second pressurizing surface may include a silicone material.

According to another embodiment of the present disclosure, in the pressurizing and sealing device for the all-solid-state secondary battery, the first pressurizing surface and/or the second pressurizing surface may have a thickness of 0.5T or more to less than 1T.

The present disclosure has the following effects by the above configuration.

By enabling a side of the pressurizing and sealing device to be vacuum-adsorbed to seal the all-solid-state secondary battery while forming the internal space that transmits a pressurizing force to the all-solid-state battery, it is possible to enable the all-solid-state battery to be pressurized under isotropic pressure conditions during the high-temperature pressurization process.

Additionally, by forming the adsorption portion at the side of each of the upper cover and the lower cover, it is possible to prevent the fluid from flowing into the internal space.

Additionally, by enabling the upper cover and the lower cover to be vacuum-adsorbed with each other by means of, for example, silicone, it is possible to form a vacuum in the internal space.

Additionally, by forming the shape fixing portion at the side of each of the upper cover and the lower cover, it is possible to prevent overall shape deformation as much as possible when the pressurizing force is applied by the heat transfer oil.

Additionally, by forming the pressurizing surface is formed at the side of each of the upper cover and the lower cover so that the pressurizing surfaces face each other, it is possible to enable the pressurizing surfaces to make contact with and pressurize both the upper and lower surfaces of the all-solid-state battery interposed therebetween.

Additionally, by forming the pressurizing surface made of a silicone material, it is possible to provide excellent heat resistance and elongation properties.

Meanwhile, the effects of the present disclosure are not limited to the effects described above and other effects not stated directly could be understood from the following description and claims.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view illustrating a pressurizing and sealing device for an all-solid-state secondary battery according to an embodiment of the present disclosure;
FIG. 2 is an exploded perspective view illustrating the pressurizing and sealing device for the all-solid-state secondary battery illustrated in FIG. 1;
FIG. 3 is a plan view illustrating the pressurizing and sealing device for the all-solid-state secondary battery illustrated in FIG. 1;
FIG. 4 is a sectional view illustrating the pressurizing and sealing device for the all-solid-state secondary battery illustrated in FIG. 1;
FIG. 5 is a bottom view illustrating an upper cover of the pressurizing and sealing device for the all-solid-state secondary battery illustrated in FIG. 1;
FIG. 6 is a reference view illustrating pressure-sensitive paper test results of the pressurizing and sealing device for the all-solid-state secondary battery in a state where an internal space is not under vacuum;
FIG. 7 is a table illustrating the properties of pressurizing surfaces made of silicone materials;
FIG. 8 is a sectional view illustrating a pressurizing and sealing device for an all-solid-state secondary battery according to another embodiment of the present disclosure;
FIGS. 9A and 9B are reference views illustrating pressurization results according to the hardness of pressurizing surfaces according to an embodiment of the present disclosure; and
FIG. 10 is a reference view illustrating pressurization results according to the thickness of pressurizing surfaces according to an embodiment of the present disclosure.

### DETAILED DESCRIPTION OF THE INVENTION

Hereinafter, exemplary embodiments of the present disclosure will be described in more detail with reference to the accompanying drawings. The embodiments of the present disclosure can be modified in various forms. Therefore, the scope of the present disclosure should not be construed as being limited to the following embodiments, but should be construed on the basis of the descriptions in the appended claims. The embodiments of the present disclosure are provided for complete disclosure of the present disclosure and to fully convey the scope of the present disclosure to those ordinarily skilled in the art.

As used herein, the singular forms are intended to include the plural forms as well, unless the context clearly indicates otherwise. It will be further understood that the terms "comprise" and/or "comprising", etc. when used in this specification, specify the presence of stated features, integers, steps, operations, elements, components, and/or combinations of them but do not preclude the presence or addition of one or more other features, integers, steps, operations, elements, components, and/or combinations thereof.

As used herein, when an element (or layer) is referred to as being disposed on another element (or layer), it can be disposed directly on the other element, or intervening element(s) (or layer(s)) may be disposed therebetween. In contrast, when an element is referred to as being directly disposed on or above another element, intervening element(s) may not be located therebetween. Further, the terms "on", "above", "below", "upper", "lower", "one side", "side surface", etc. are used to describe one element's relationship to another element(s) illustrated in the drawings.

Hereinafter, a pressurizing and sealing device 1 for an all-solid-state secondary battery according to an embodiment of the present disclosure will be described in detail with reference to the accompanying drawings.

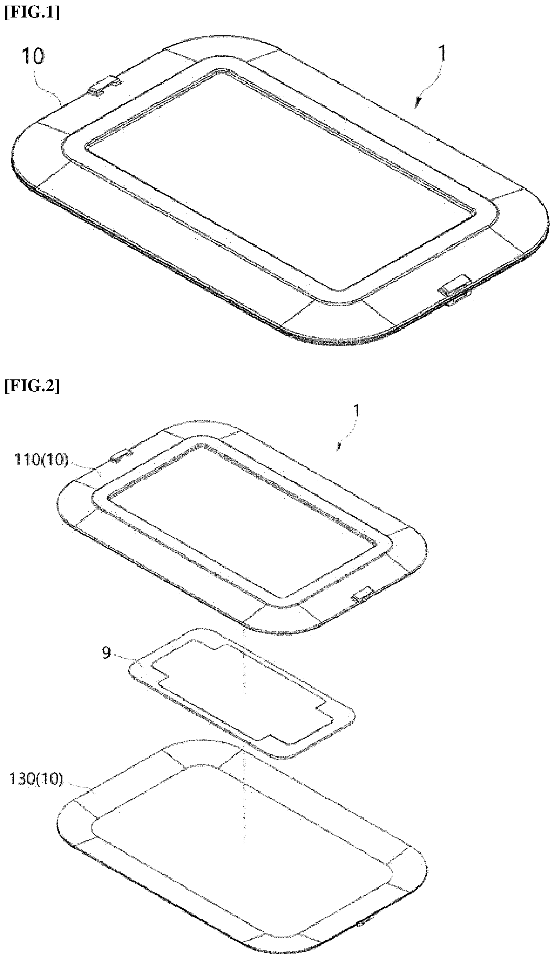

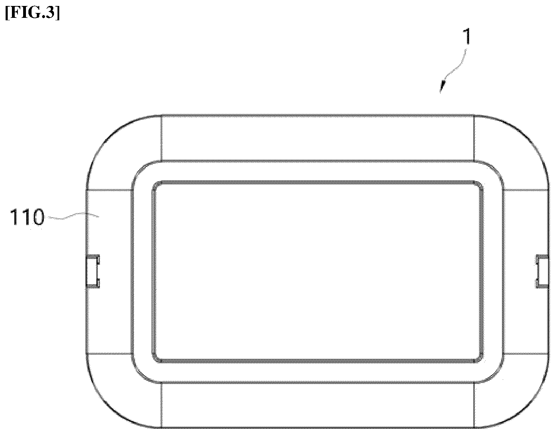

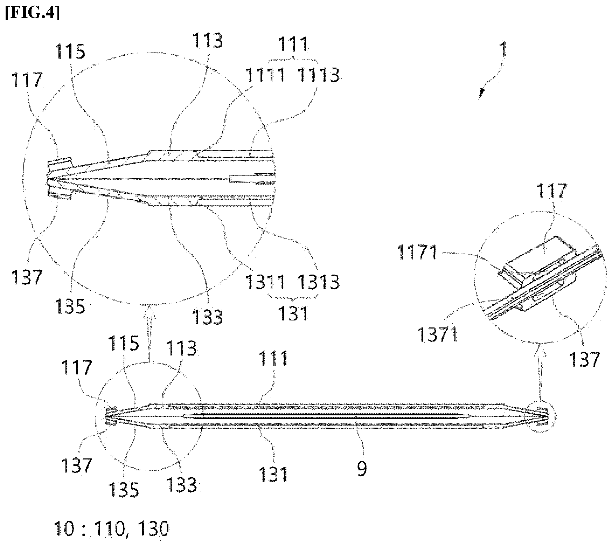

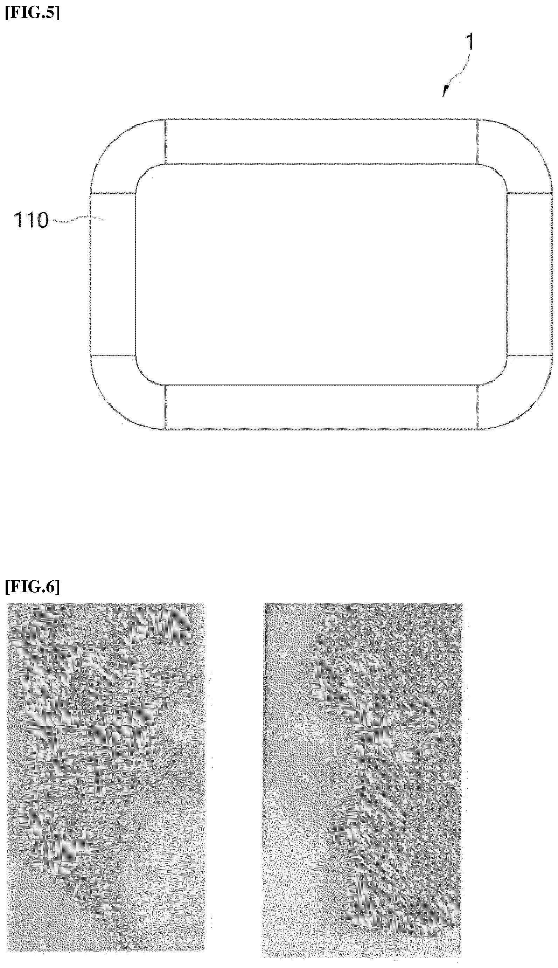

FIG. 1 is a perspective view illustrating the pressurizing and sealing device for the all-solid-state secondary battery according to the embodiment of the present disclosure. FIG. 2 is an exploded perspective view illustrating the pressurizing and sealing device for the all-solid-state secondary battery illustrated in FIG. 1. FIG. 3 is a plan view illustrating the pressurizing and sealing device for the all-solid-state secondary battery illustrated in FIG. 1. FIG. 4 is a sectional view illustrating the pressurizing and sealing device for the all-solid-state secondary battery illustrated in FIG. 1. FIG. 5 is a bottom view illustrating an upper cover 110 of the pressurizing and sealing device for the all-solid-state secondary battery illustrated in FIG. 1.

Referring to FIGS. 1 to 5, the present disclosure relates to a pressurizing and sealing device 1 for an all-solid-state secondary battery, in which a side of the pressurizing and sealing device 1 is vacuum-adsorbed to seal an all-solid-state secondary battery 9 while forming an internal space that transmits a pressurizing force to the all-solid-state battery 9, thereby enabling the all-solid-state battery 9 to be pressurized under isotropic pressure conditions during a high-temperature pressurization process. It is preferable that the pressurizing and sealing device 1 is made of, for example, a silicone material, and a detailed description thereof will be provided later.

To this end, the pressurizing and sealing device 1 may include a sealing part 10.

Referring to FIGS. 1 to 5, the sealing part 10 is a configuration that forms an outer surface of the pressurizing and sealing device 1. The sealing part 10 may have, for example, a unit cell or a bi-cell sealed in an internal space thereof, but there are no particular limitations on a cell to be sealed. Additionally, the sealing part 10 may have, for example, a polygonal plane shape with round corners, but there are no particular limitations on its shape. Additionally, at least a side of the sealing part 10 may be made of a material having a high elongation property so as to pressurize the all-solid-state battery 9 therein. For example, the sealing part 10 may be made of a silicone material.

With the configuration of the sealing part 10, a fluid such as heat transfer oil may be prevented from penetrating into the internal space of the sealing part 10 and making contact with the all-solid-state battery 9 during a pressurization process. Specifically, when the fluid such as heat transfer oil is introduced into a vessel and a pressure higher than a predetermined level is transmitted to the sealing part 10, at least the side of the sealing part 10 may pressurize the all-solid-state battery 9 placed in the internal space of the sealing part 10. Therefore, the sealing part 10 may protect the all-solid-state battery 9 placed in the internal space from direct contact with the fluid while allowing a high-temperature pressurization process to be performed.

To this end, the sealing part 10 may include the upper cover 110 and a lower cover 130. For example, it is preferable that the upper cover 110 and the lower cover 130 are formed in shapes corresponding to each other to protect the all-solid-state battery 9 from the fluid. The term "internal space" refers to a sealed space in which the all-solid-state battery 9 is placed by the upper cover 110 and the lower cover 130 to form a vacuum environment. That is, the upper cover 110 and the lower cover 130 may be configured to be vacuum-adsorbed with each other.

The upper cover 110 is a configuration that is assembled with the lower cover 130 so that the all-solid-state secondary battery 9 is interposed therebetween. For example, the upper cover 110 may cover the all-solid-state battery 9 by being assembled or vacuum-adsorbed with a side of the lower cover 130. To this end, the upper cover 110 may include a first pressurizing portion 111, a first shape fixing portion 113, a first adsorption portion 115, and a first detachment portion 117.

The first pressurizing portion 111 is a configuration that pressurizes an upper surface of the all-solid-state secondary battery 9 placed in the internal space of the sealing part 10. The first pressurizing portion 111 may be formed at a side of the upper cover 110 so as to pressurize the upper surface of the all-solid-state battery 9. For example, the first pressurizing portion 111 may be formed in a predetermined shape approximately at a center of the upper cover 110. As an example, the first pressurizing portion 111 may be formed in a quadrangular plane shape approximately at the center of the upper cover 110, but the scope of the present disclosure is not limited by a specific example. To this end, the first pressurizing portion 111 may include a first pressurizing depression 1111 and a first pressurizing surface 1113.

The first pressurizing depression 1111 is a groove configuration that is formed on the upper surface of the upper cover 110, and may allow the upper surface of the all-solid-state battery 9 and the first pressurizing surface 1113 to be brought into close contact with each other and pressurized. For example, the first pressurizing depression 1111 may be formed in form of a groove that is stepped downward at a side of the upper cover 110, but the scope of the present disclosure is not limited by a specific example. Additionally, the first pressurizing depression 1111 may be formed, for example, in a downward stepped shape so that when a pressure higher than a predetermined level is applied to the upper cover 110, the pressure is easily transferred to the upper surface of the all-solid-state battery 9, thereby allowing the first pressurizing surface 1113 to be formed relatively thinner than the surrounding configurations such as the first shape fixing portion 113. Accordingly, the first pressurizing surface 1113 may easily transmit the pressurizing force by making close contact with the all-solid-state battery 9 placed in the internal space of the sealing part 10.

The first pressurizing surface 1113 is a configuration that pressurizes the upper surface of the all-solid-state battery 9 placed in the internal space of the sealing part 10 by being pressurized by the fluid such as heat transfer oil during the pressurization process. For example, the first pressurizing surface 1113 may be formed to face a second pressurizing surface 1313 of the lower cover 130, which will be described later, so that the first pressurizing surface 1113 and the second pressurizing surface 1313 are brought into contact with and pressurize the upper and lower surfaces of the all-solid-state battery 9 interposed therebetween, respectively. Additionally, it is preferable that opposing surfaces of the first and second pressurizing surfaces 1113 and 1313 are formed substantially flat so as to pressurize the all-solid-state battery 9 by making close contact with the all-solid-state battery 9 in a vertical direction under isotropic pressure conditions. As described above, it is preferable that the first pressurizing surface 1113 has a smaller vertical thickness than the first shape fixing portion 113. A detailed description of the vertical thickness of the first pressurizing surface 113 will be provided later.

The first shape fixing portion 113 is a configuration that is formed between the first pressurizing portion 111 and the first adsorption portion 115, and may maintain the shape of the upper cover 110 during the pressurization process. The first shape fixing portion 113 may have, for example, a quadrangular frame-shaped plane shape with round corners, but there are no particular limitations on its shape. For example, the first shape fixing portion 113 may be formed to face a second shape fixing portion 133 of the lower cover 130 so as to maintain the shape of the sealing part 10 during the pressurization process. In detail, the first and second shape fixing portions 113 and 133 may formed in a frame shape along outer edges of the first and second pressurizing portions 111 and 131 in order to maintain the shape of the sealing part 10, so even when the first and second pressurizing portions 111 and 131 are deformed in shape when the upper cover 110 and the lower cover 130 are vacuum-adsorbed with each other or the high-temperature pressurization process is performed, the outer edges of the first and second pressurizing portions 111 and 131 may be prevented from being deformed in shape as much as possible. Therefore, it is preferable that the first shape fixing portion 113 has a larger vertical thickness than the first pressurizing portion 111 and/or the first adsorption portion 115, which will be described later.

The first adsorption portion 115 is a configuration that is formed at a side of the upper cover 110, for example, at ends or edges of the upper cover 110, and may form a vacuum in the internal space of the sealing part 10 by vacuum adsorption with a second adsorption portion 135 or release the vacuum. The first adsorption portion 115 may be formed in a polygonal plane shape with round corners along outer edges of the first shape fixing portion 113, and may be vacuum-adsorbed with the second adsorption portion 135 so that a vacuum environment is formed in the internal space of the sealing part 10 during the pressurization process for the all-solid-state battery 9. In this case, it is preferable that each corner of the first adsorption portion 115 is formed in a rounded shape to maximize airtightness of the internal space of the sealing part 10 under isotropic pressurization conditions using heat transfer oil.

This is because, in a case where the first adsorption portion 115 and the second adsorption portion 135 are formed in a polygonal frame shape such as a quadrangular frame shape, airtightness is inevitably lowered compared to when they are formed in a polygonal plane shape with round corners. It is preferable that the first adsorption portion 115 is made of a silicone material so that it is vacuum-adsorbed with the first adsorption portion 135 by means of silicone. The term "vacuum environment" may refer to an environment with a pressure value lower than atmospheric pressure.

Additionally, it is preferable that the first adsorption portion 115 is formed to be inclined toward the ends of the upper cover 110 adjacent thereto, and it is more preferable that the first adsorption portion 115 is formed to be inclined downward toward the ends of the upper cover 110. For example, the first adsorption portion 115 may be formed with a cross-sectional shape that is inclined from ends of the first shape fixing portion 113 adjacent thereto toward the ends of the upper cover 110 adjacent thereto. In detail, the first and second adsorption portions 115 and 135 may be inclined to converge toward ends of the sealing part 10 adjacent thereto in order to secure airtightness of the internal space of the sealing part 10 and to facilitate mutual vacuum adsorption. The first adsorption portion 115 may be vacuum-adsorbed with the second adsorption portion 135. At this time, the upper and lower surfaces of the all-solid-state battery 9 placed in the internal space of the sealing part 10 may be maintained in a state where they are in contact with or in partial close contact with the first and second pressurizing surfaces 1113 and 1313, respectively, but there are no particular limitations on their state.

The first detachment portion 117 is a configuration that is formed at a side of the upper cover 110, and may allow the upper cover 110 to be detached from the lower cover 130 when the pressurization process is completed. For example, the first detachment portion 117 may be formed at each of opposite ends of the upper cover 110 so that the upper and lower covers 110 and 130 are separated from each other by using a second detachment portion 137 together with the first detachment portion 117 when the pressurization process is completed. Specifically, the first detachment portion 117 may be formed at a side of the upper cover 110 where the first detachment portion 117 overlaps the second detachment portion 137 of the lower cover 130 in a vertical direction.

Additionally, a first detachment hole 1171 may be formed at a side of the first detachment portion 117 so that when the pressurization process is completed, the upper cover 110 and the lower cover 130 are separated from each other by using the first detachment hole 1171. For example, the upper cover 110 and the lower cover 130 may be separated from each other when the pressurization process is completed by using the first detachment hole 1171 of the first detachment portion 117 and a second detachment hole 1371 of the second detachment portion 137. As an example, a detachment means may be inserted into the first detachment hole 1171 and the second detachment hole 1371 to release vacuum adsorption of the upper cover 110 and the lower cover 130. Here, the term "detachment means" refers to a means for releasing a vacuum from a device in an airtight state by inserting the means into a detachment hole using a pin or bolt, etc. Alternatively, a worker may manually separate the upper and lower covers 110 and 130 using the first detachment hole 1171 and the second detachment hole 1371, but the scope of the present disclosure is not limited by a specific example. The first detachment hole 1171 and the second detachment hole 1371 may both extend in a horizontal direction or a vertical direction, but the scope of the present disclosure is not limited thereto, and may be formed in form of a through-hole having any shape, and in some cases may be formed in form of a groove.

Referring to FIGS. 1 to 5, the lower cover 130 is a configuration that is assembled with the upper cover 110 so that the all-solid-state secondary battery 9 is interposed therebetween. For example, the lower cover 130 may be assembled with a side of the upper cover 110 to cover the all-solid-state battery 9. The lower cover 130 may symmetrical to the upper cover 110 along an x-axis (or horizontal plane) direction and include substantially the same configurations as the upper cover 110. However, it should be noted that a configuration corresponding to one or more of the second pressurizing portion 131, the second shape fixing portion 133, the second adsorption portion 135, and the second detachment portion 137 may be omitted in some cases.

To this end, the lower cover 130 may include the second pressurizing portion 131, the second shape fixing portion 133, the second adsorption portion 135, and the second detachment portion 137.

The second pressurizing portion 131 is a configuration that pressurizes the lower surface of the all-solid-state secondary battery 9 placed in the internal space of the sealing part 10. The second pressurizing portion 131 may be formed at a side of the lower cover 130 so as to pressurize the lower surface of the all-solid-state battery 9. For example, the second pressurizing portion 131 may be formed in a predetermined shape approximately at a center of the lower cover 130, and may be formed in a shape corresponding to the first pressurizing portion 111. The second pressurizing portion 131 may include a second pressurizing depression 1311 and the second pressurizing surface 1313.

The second pressurizing depression 1311 is a groove configuration that is formed on a lower surface of the lower cover 110, and may allow the lower surface of the all-solid-state battery 9 and the second pressurizing surface 1313 to be brought into close contact with each other and pressurized. For example, the second pressurizing depression 1311 may be formed in form of a groove that is stepped at a side of the lower cover 130, but the scope of the present disclosure is not limited by a specific example. Additionally, the second pressurizing depression 1311 may be formed, for example, in an upward stepped shape so that when a pressure higher than a predetermined level is applied to the lower cover 130, the pressure is easily transferred to the lower surface of the all-solid-state battery 9, thereby allowing the second pressurizing surface 1313 to be formed relatively thinner than the surrounding configurations such as the second shape fixing portion 133. Accordingly, the second pressurizing surface 1313 may easily transmit the pressurizing force by making close contact with the all-solid-state battery 9 placed in the internal space of the sealing part 10.

The second pressurizing surface 1313 is a flat surface configuration that pressurizes the lower surface of the all-solid-state battery 9 placed in the internal space of the sealing part 10 by being pressurized by the fluid such as heat transfer oil during the pressurization process. For example, the second pressurizing surface 1313 may be formed to face the first pressurizing surface 1113 of the upper cover 110 described above so that the first pressurizing surface 1113 and the second pressurizing surface 1313 are brought into contact with and pressurize the upper and lower surfaces of the all-solid-state battery 9 interposed therebetween, respectively. It is preferable that the second pressurizing surface 1313 has a smaller vertical thickness than the second shape fixing portion 133.

The second shape fixing portion 133 is a configuration that is formed between the second pressurizing portion 131 and the second adsorption portion 135, and may maintain the shape of the lower cover 110 during the pressurization process. The second shape fixing portion 133 may have, for example, a quadrangular frame-shaped plane shape, but there are no particular limitations on its shape. For example, the second shape fixing portion 133 may be formed to face the first shape fixing portion 113 of the upper cover 110 so as to maintain the shape of the lower cover 130 during the pressurization process. With the configuration of the second shape fixing portion 133, while the second pressurizing portion 131 is deformed in shape to some extent by the pressurizing force applied by the fluid such as heat transfer oil, the outer edges of the second pressurizing portion 131 may be prevented from being deformed in shape. Therefore, it is preferable that the second shape fixing portion 133 has a larger vertical thickness than the second pressurizing portion 131 and/or the second adsorption portion 135, which will be described later. Additionally, it is preferable that the second shape fixing portion 133 is formed in a shape substantially corresponding to that of the first shape fixing portion 113, but the scope of the present disclosure is not limited thereto.

The second adsorption portion 135 is a configuration that is formed at a side of the lower cover 130, for example, at ends or edges of the lower cover 130, and may form a vacuum in the internal space of the sealing part 10 by vacuum adsorption with the first adsorption portion 115 or release the vacuum. The second adsorption portion 135 may be formed in a polygonal plane shape with round corners along outer edges of the second shape fixing portion 133. In this case, it is preferable that each corner of the second adsorption portion 135 is formed in a rounded shape to maximize airtightness of the internal space of the sealing part 10 under isotropic pressure conditions using heat transfer oil.

Additionally, it is preferable that the second adsorption portion 135 is formed to be inclined toward the ends of the lower cover 130, and it is more preferable that the second adsorption portion 135 is formed to be inclined upward toward the ends of the lower cover 130. For example, the first adsorption portion 115 may be formed with a cross-sectional shape that is inclined from the outer edges of the second shape fixing portion 133 toward the ends of the lower cover 130. The second adsorption portion 135 may be vacuum-adsorbed with the first adsorption portion 115. At this time, the upper and lower surfaces of the all-solid-state battery 9 placed in the internal space of the sealing part 10 may be maintained in a state where they are in contact with or in partial close contact with the first and second pressurizing surfaces 1113 and 1313, respectively. Additionally, it is preferable that the second adsorption portion 135 is made of a silicon material.

In general, during a high-temperature pressurization process for the all-solid-state secondary battery 9, when the process is performed while air remains inside the sealing part 10, a final product highly tends to be defective. That is, isotropic pressure conditions for the all-solid-state battery 9 placed inside the sealing part 10 cannot be satisfied due to the residual air. To overcome this problem, the pressurizing and sealing device 1 according to the embodiment of the present disclosure may form a vacuum in the internal space through vertical vacuum adsorption of the upper cover 110 and the lower cover 130.

FIG. 6 is a reference view illustrating pressure-sensitive paper test results of the pressurizing and sealing device for the all-solid-state secondary battery in a state where the internal space is not under vacuum

### Vacuum Adsorption

Referring to FIGS. 1 to 5, the first adsorption portion 115 and the second adsorption portion 135 may be adsorbed with each other in corresponding shapes in a vertical direction, and may vacuum-adsorb the ends and/or the internal space of the sealing part 10 so that the all-solid-state battery 9 is pressurized. In detail, the first and second adsorption portions 115 and 135 may be inclined from the outer edges of the second shape fixing portion 133 toward the ends of the lower cover 130 so as to converge toward the ends of the first adsorption portion 115 or the upper cover 110 in order to secure airtightness of the internal space of the sealing part 10. The first and second adsorption portions 115 and 135 may be formed in a polygonal plane shape with round corners along the outer edges of the first and second shape fixing portions 113 and 133, and may be vacuum-adsorbed with each other so that a vacuum environment is formed in the internal space of the sealing part 10 during the pressurization process for the all-solid-state battery 9. At this time, the upper and lower surfaces of the all-solid-state battery 9 placed in the internal space of the sealing part 10 may be maintained in a state where they are in contact with or in partial close contact with the first and second pressurizing surfaces 1113 and 1313, respectively.

Referring to FIG. 6, after placing the all-solid-state battery 9 in the internal space of the sealing part 10, a pressurization process was performed using heat transfer oil or water at a pressure of 2,000 bar under room temperature environment for a duration time of 1 minute. As described above, FIG. 6 illustrates pressure-sensitive paper test results in a state where the internal space is not under vacuum.

At this time, it can be seen that pressurization of the all-solid-state battery 9 was achieved, but air bubbles were generated due to inflow of air into the internal space, which resulted in deformation of the pressurizing surfaces 1113 and 1313. Additionally, it can be also seen that pressurization uniformity was low. Therefore, in order to prevent the above problems, a separate vacuum means communicating with the outside may be provided. However, the pressurizing and sealing device 1 according to the embodiment of the present disclosure performed the pressurization process through vertical vacuum adsorption of the upper cover 110 and the lower cover 130.

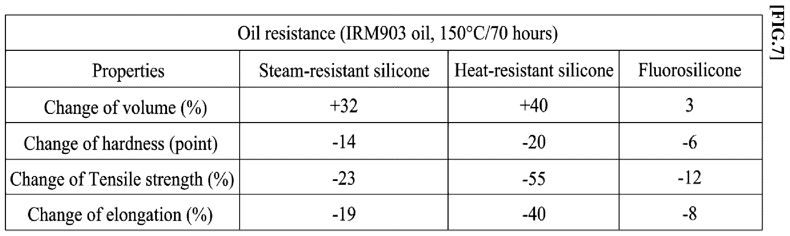

FIG. 7 is a table illustrating the properties of pressurizing surfaces made of silicone materials.

### Material of Pressurizing Surfaces 1113 and 1313

In general, when performing a high-temperature pressurization process for the all-solid-state secondary battery 9, the process is preferably carried out at a temperature of about 100°C or higher, more preferably at a maximum temperature of about 200°C or higher, and at a pressure of 7,000 bar. Additionally, since the pressurization process according to embodiment of the present disclosure is carried out at about 200°C, it is preferable to use heat transfer oil rather than water, but there are no particular limitations on the type of fluid.

Accordingly, the pressurizing surfaces 1113 and 1313 that make contact with and pressurize the upper and lower surfaces of the all-solid-state battery 9 require a material with a high elongation property so that pressure is applied to all the surfaces of the all-solid-state battery 9 because of the characteristic of isotropic pressure in which pressure is applied from all directions to the all-solid-state battery 9. A film material such as polytetrafuoroethylene (PTFE), polyether ether ketone (PEEK), and polyimide (PI), which are commonly used in pressurization processes, has high performance in heat resistance and oil resistance, but its elongation property is relatively low and cannot be improved, making it difficult to use as a pressurization material. At this time, the elongation property refers to a stretched state, and in the embodiment of the present disclosure, it refers to a property of a pressurization material to closely adhere to an object to be pressurized according to the shape of the object, and at the same time, a property of having a restoring force for repeated use.

The pressurizing surfaces 1113 and 1313 according to the embodiment of the present disclosure are preferably made of a silicone material having a high elongation property. Here, the term "silicone" material refers to a pressurization material that satisfies the elasticity and heat resistance of rubber materials, and compensates for its weak oil resistance with special specification silicone.

In this regard, referring to FIG. 7, illustrated is a comparison table showing the properties of steam-resistant silicone (KCC SILICONE; SH6070U), heat-resistant silicone (KCC SILICONE; SH9161U), and fluorosilicone (KCC SILICONE; FQE205) from left to right. The pressurizing surfaces 1113 and 1313 according to the embodiment of the present disclosure may be made of steam-resistant silicone, heat-resistant silicone, or fluorosilicone. Among these, fluorosilicone is preferred, but the scope of the present disclosure is not limited thereto. A detailed description related to the selection of fluorosilicone as the pressurization material will be provided below.

A test was conducted under the following conditions: the test temperature was 150°C, the duration time was 70 hours, and IRM 903 oil (ASTM oil test reference oil) was used. As a result of the test, considering the properties of a special specification silicone material such as change of volume, change of hardness, change of tensile strength, and change of elongation, fluorosilicone with the best performance in terms of oil resistance, which is a weak point of the silicone material, was selected. However, when using water or the like as a pressure-transmitting medium rather than heat transfer oil during the pressurization process, there is no need to limit the material of the pressurizing surfaces 1113 and 1313 according to the embodiment of the present disclosure to fluorosilicone.

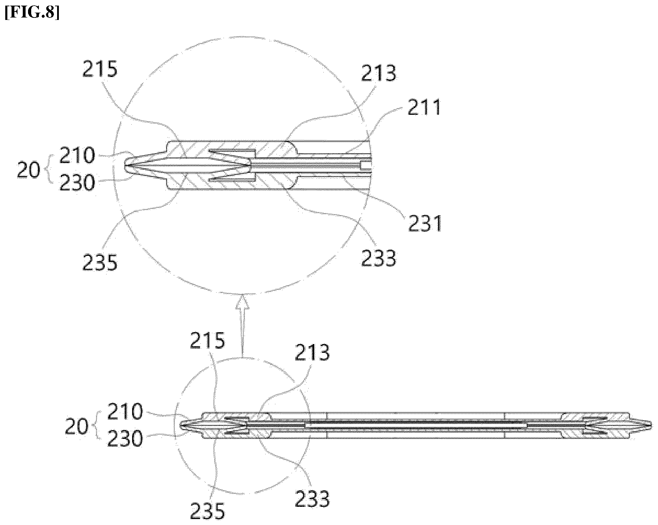

FIG. 8 is a sectional view illustrating a pressurizing and sealing device for an all-solid-state secondary battery according to another embodiment of the present disclosure.

In the other embodiment, referring to FIG. 8, first and second shape fixing portions 213 and 233 are configurations that are formed between first and second pressurizing portions 211 and 231 and first and second adsorption portions 215 and 235, which will be described later, and may maintain the shape of a sealing part 20 during a pressurization process. The first and second shape fixing portions 213 and 233 may have, for example, a quadrangular frame-shaped plane shape, but there are no particular limitations on their shape. For example, the first shape fixing portion 213 may be formed to face the second shape fixing portion 233 of a lower cover 230 so as to maintain the shape of an upper cover 210 during the pressurization process. In detail, the first and second shape fixing portions 213 and 233 may formed in a frame shape along outer edges of the first and second pressurizing portions 211 and 231 in order to maintain the shape of the upper cover 210 and the lower cover 230, so the outer edges of the first and second pressurizing portions 211 and 231 may be prevented from being deformed in shape during the pressurization process.

Additionally, the first and second shape fixing portions 213 and 233 may be formed to positions where they overlap vertically with the first and second adsorption portions 215 and 235 in order to enhance the shape maintenance of the sealing part 20. For example, the first and second shape fixing portions 213 and 233 may extend toward ends of the first and second adsorption portions 215 and 235 while having substantially the same vertical thickness, and may enhance prevention of shape deformation of the sealing part 20 caused by surface pressure during the pressurization process. With the configuration of the first and second shape fixing portions 213 and 233, while the first and second pressurizing portions 211 and 231 are deformed in shape by a pressurizing force applied by heat transfer oil, the outer edges of the first and second pressurizing portions 211 and 231 may be prevented from being deformed in shape. Therefore, it is preferable that the first and second shape fixing portions 213 and 233 and the first and second adsorption portions 215 and 235 have a larger vertical thickness than the first and second pressurizing portions 211 and 231.

The first and second adsorption portions 215 and 235 are adsorption pad configurations that are each formed at a side of the sealing part 20 when the upper cover 210 and the lower cover 230 are assembled, and may block an internal space of the sealing part 20 communicating with the first and second shape fixing portions 213 and 233 as well as ends of the sealing part 20, thereby forming a vacuum in the internal space of the sealing part 20 or releasing the vacuum.

In detail, the first and second adsorption portions 215 and 235 may be inclined from outer edges of the first and second shape fixing portions 213 and 233 toward ends of the upper cover 210 so as to converge toward each other in order to form a vacuum in the internal space of the sealing part 20. At this time, opposing surfaces of the first and second adsorption portions 215 and 235 may be pressurized to make contact with each other, thereby allowing the ends of the upper cover 210 and the lower cover 230 to be vacuum-adsorbed with each other.

Additionally, the first and second adsorption portions 215 and 235 may be formed flat at a center of the internal space, and first sides of the first and second adsorption portions 215 and 235 may be formed with a cross-sectional shape that is inclined from the center toward the ends of the sealing part 20 so that inflow of a fluid (e.g., water) is blocked during the pressurization process, thereby ensuring airtightness of the sealing part 20. Additionally, second sides of the first and second adsorption portions 215 and 235 may be formed with a cross-sectional shape that is inclined from the center toward the first and second shape fixing portions 213 and 233 so that airtightness of the sealing part 20 is enhanced when the upper cover 210 and the lower cover 230 are vertically vacuum-adsorbed with each other.

Therefore, a fluid such as heat transfer oil may be prevented from penetrating into the internal space of the sealing part 20 and making contact with the all-solid-state battery 9 during the pressurization process. For example, the upper cover 210 and the lower cover 230 made of a silicone material may be vacuum-adsorbed with each other, thereby preventing heat transfer oil, etc. from flowing into the internal space of the first and second adsorption portions 215 and 235, the first and second shape fixing portions 213 and 233, and the first and second pressurizing portions 211 and 231 and making contact with the all-solid-state battery 9.

Specifically, when the fluid such as heat transfer oil is introduced into a vessel and a pressure higher than a predetermined level is transmitted to the sealing part 20, at least the side of the sealing part 20 may pressurize the all-solid-state battery 9 placed in the internal space of the sealing part 20. At this time, the sealing part 20 may protect the all-solid-state battery 9 placed in the internal space from direct contact with the heat transfer oil while allowing a high-temperature pressurization process to be performed.

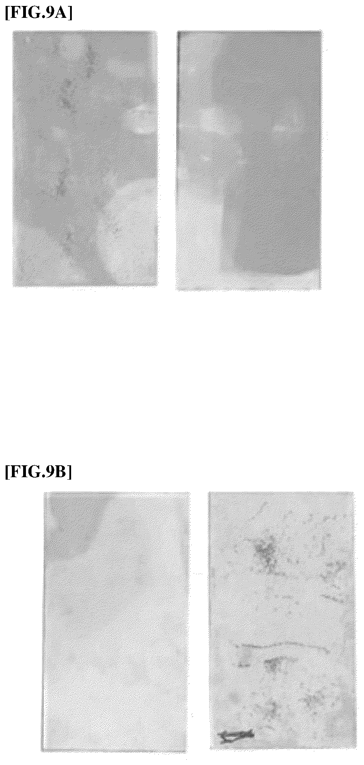

FIGS. 9A and 9B are reference views illustrating pressurization results according to the hardness of pressurizing surfaces according to one embodiment of the present disclosure.

### Hardness of Pressurizing Surfaces 1113 and 1313

Referring to FIGS. 9A and 9B, in a pressurizing device with pressurizing surfaces 1113 and 1313 having different hardnesses, pressure-sensitive paper (3ea) was placed in the internal space of the sealing part 10, and graphite-treated copper foil was placed on the uppermost and lowermost sides of the pressure-sensitive paper. Silicone for molding, which constitutes the pressurizing surfaces 1113 and 1313, was classified into two types: hardness 5 silicone (Comparative Example 1; FIG. 9A) and hardness 20 silicone (Comparative Example 2; FIG. 9B).

After that, a pressurization process was performed using water at a pressure of 2,000 bar under room temperature environment for a duration time of 1 minute. As a result of the pressurization process, it can be seen that Comparative Example 1 had a significantly increased pressurization rate compared to Comparative Example 2. This thus indicates that the lower the silicone hardness of the pressurizing surfaces 1113 and 1313, the more advantageous it was for the pressurization process.

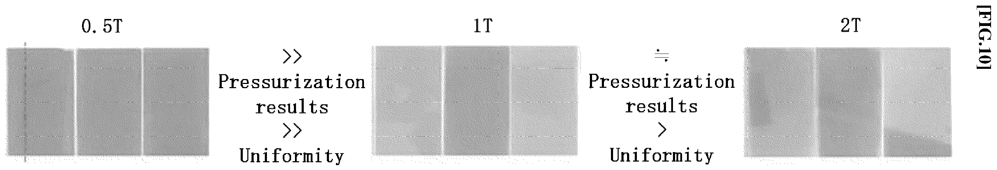

FIG. 10 is a reference view illustrating pressurization results according to the thickness of pressurizing surfaces according to one embodiment of the present disclosure.

### Thickness of Pressurizing Surfaces 1113 and 1313

Referring to FIG. 10, for pressurizing surfaces made of silicone to which thicknesses of 0.5T, 1T, and 2T were applied, a pressurization process was performed using water at a pressure of 2,000 bar under room temperature environment for a duration time of 1 minute. At this time, the configuration of the pressurizing surfaces 1113 and 1313 remained substantially the same as that described above, and pressure-sensitive paper (5ea) was placed in the internal space of the sealing part 10.

As a result of the pressurization process, it can be seen that the pressurizing surfaces 1113 and 1313 of 0.5T had significantly improved pressurization results and pressurization uniformity. Additionally, it can be also seen that while the pressurizing surfaces 1113 and 1313 of 1T and the pressurizing surfaces 1113 and 1313 of 2T had similar pressurization results, the pressurizing surfaces 1113 and 1313 of 1T had higher pressurization uniformity.

This thus indicates that the thinner the pressurizing surfaces 1113 and 1313, the higher the pressurization results and uniformity. Therefore, it is preferable that the pressurizing surfaces 1113 and 1313 according to the embodiment of the present disclosure have a thickness of approximately 1T or less, and preferably 0.5T or more to less than 1T.

The foregoing detailed description may be merely an example of the present disclosure. Also, the inventive concept is explained by describing the preferred embodiments and will be used through various combinations, modifications, and environments. That is, the inventive concept may be amended or modified without departing from the scope of the technical idea and/or knowledge in the art. The foregoing embodiments are for illustrating the best mode for implementing the technical idea of the present disclosure, and various modifications may be made therein according to specific application fields and uses of the present disclosure. Therefore, the foregoing detailed description of the present disclosure is not intended to limit the inventive concept to the disclosed embodiments.

## Claims

1. A pressurizing and sealing device for an all-solid-state secondary battery, the pressurizing and sealing device comprising:
a sealing part comprising a lower cover, and an upper cover configured to be vacuum-adsorbed with a side of the lower cover to form an internal space in which the all-solid-state secondary battery is placed,
wherein the upper cover comprises:
a first pressurizing portion configured to pressure an upper side of the all-solid-state battery placed in the internal space of the sealing part,
the first pressurizing portion comprises:
a first pressurizing surface configured to pressurize an upper surface of the all-solid-state battery placed in the internal space of the sealing part by being pressurized by a fluid during a pressurization process,
the lower cover comprises:
a second pressurizing portion configured to pressure a lower side of the all-solid-state battery placed in the internal space of the sealing part, and
the second pressurizing portion comprises:
a second pressurizing surface configured to pressurize a lower surface of the all-solid-state battery placed in the internal space of the sealing part by being pressurized by the fluid during the pressurization process.

2. The pressurizing and sealing device of claim 1, wherein the upper cover further comprises:
a first adsorption portion formed at ends or edges of the upper cover and configured to be adsorbed with a side of the lower cover.

3. The pressurizing and sealing device of claim 2, wherein the upper cover further comprises:
a first shape fixing portion configured to maintain a shape of the upper cover during the pressurization process.

4. The pressurizing and sealing device of claim 3, wherein the first shape fixing portion has a larger vertical thickness than the first pressurizing surface.

5. The pressurizing and sealing device of claim 2, wherein the internal space of the sealing part is vacuumed by adsorption of the first adsorption portion.

6. The pressurizing and sealing device of claim 2, wherein the upper cover further comprises:
a first detachment portion formed at a side of the upper cover and configured to allow the upper cover to be detached from the lower cover when the pressurization process is completed.

7. The pressurizing and sealing device of claim 6, wherein the first detachment portion comprises:
a first detachment hole extending in one direction.

8. The pressurizing and sealing device of claim 1, wherein the first pressurizing portion further comprises:
a first pressurizing depression formed in a groove shape on an upper surface of the upper cover and configured to allow the first pressurizing surface and the upper surface of the all-solid-state battery to be brought into contact with each other and pressurized.

9. The pressurizing and sealing device of claim 2, wherein the first adsorption portion is formed in a shape with round corners.

10. The pressurizing and sealing device of claim 2, wherein the upper cover further comprises:
a second shape fixing portion configured to maintain a shape of the lower cover during the pressurization process; and
a second adsorption portion formed at ends or edges of the lower cover and configured to be adsorbed with the first adsorption portion.

11. The pressurizing and sealing device of claim 6, wherein the lower cover further comprises: a second detachment portion formed at an end of the lower cover and configured to allow the lower cover to be detached from the upper cover when the pressurization process is completed.

12. The pressurizing and sealing device of claim 1, wherein the second pressurizing portion further comprises:
a second pressurizing depression formed in a groove shape on a lower surface of the lower cover and configured to allow a side of the second pressurizing portion and the lower surface of the all-solid-state battery to be brought into contact with each other and pressurized.

13. The pressurizing and sealing device of claim 1, wherein the first pressurizing surface and/or the second pressurizing surface comprises a silicone material.

14. The pressurizing and sealing device of claim 1, wherein the first pressurizing surface and/or the second pressurizing surface has a thickness of 0.5T or more to less than 1T.
